(19) Europäisches Patentamt
European Patent Office
Office européen des brevets

(11) Numéro de publication : **0 407 289 B1**

# (12) FASCICULE DE BREVET EUROPEEN

(45) Date de publication du fascicule du brevet : **18.10.95 Bulletin 95/42**

(51) Int. Cl.[6] : **H01B 3/46,** H01B 3/04, C08K 3/00, H01B 3/12

(21) Numéro de dépôt : **90401915.5**

(22) Date de dépôt : **02.07.90**

## (54) Procédé d'obtention d'un produit électriquement isolant.

(30) Priorité : **03.07.89 FR 8908911**

(43) Date de publication de la demande : **09.01.91 Bulletin 91/02**

(45) Mention de la délivrance du brevet : **18.10.95 Bulletin 95/42**

(84) Etats contractants désignés : **AT BE CH DE DK ES FR GB GR IT LI LU NL SE**

(56) Documents cités :
**FR-A- 2 450 855**
**FR-A- 2 451 387**
**PATENT ABSTRACTS OF JAPAN, vol. 4, no. 106 (C-20)[588], 30 juillet 1980**
**WPI, FILE SUPPLIER, no. 78-24316A, Derwent Publications Ltd., Londres (GB)**
**WPI, FILE SUPPLIER, Derwent Publications Ltd., Londres (GB); AN 82-34035e**
**WPI, FILE SUPPLIER, Derwent Publications Ltd., Londres (GB); AN 78-24284a**

(73) Titulaire : **JEUMONT INDUSTRIE - JI TOUR FIAT
1 Place de la Coupole
F-92400 Courbevoie (FR)**

(72) Inventeur : **Caze, Claude
6 Sentier des Filatiers
F-59810 Lesquin (FR)**
Inventeur : **Boivin, Jean-Claude
2 rue Charles Castermant
F-59150 Wattrelos (FR)**
Inventeur : **Canini, Jean-Marc
Rue de Quievelon Aibes
F-59140 Cousolre (FR)**
Inventeur : **Cevaer, Yves
608 Rue Roger Salengro
F-59460 Jeumont (FR)**

(74) Mandataire : **Phélip, Bruno et al
c/o Cabinet Harlé & Phélip
21, rue de La Rochefoucauld
F-75009 Paris (FR)**

**EP 0 407 289 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un produit électriquement isolant et en particulier un tel produit destiné à être utilisé à des températures très élevées, pouvant atteindre 1000°C, et en atmosphère oxydante.

L'invention vise également le procédé d'obtention du produit précité.

Le produit électriquement isolant selon l'invention est avantageusement utilisable pour réaliser des bobinages de tous types pour machine électrique tournante, des bobinages statiques de transformateur, inducteur et self-inductance, des résistances électriques, ou encore pour la réalisation d'éléments isolants de forme complexe tels que des isolateurs, des cales isolantes ou des boucliers thermiques.

Un produit isolant du genre précité est décrit dans le DE-A-2001161. Ce produit est obtenu à partir d'un mélange de mica activé et de résine de silicone, le rapport en poids de mica sur résine silicone étant compris entre 1,5 et 3,5, ce mélange étant soumis à un traitement thermique approprié. Ce mélange n'est pas fluide et ne peut donc pas être utilisé pour imprégner globalement des éléments, un moteur par exemple. De plus, la tenue aux températures élevées du produit isolant obtenu est limitée puisqu'elle ne peut dépasser 600°C.

Le brevet FR-1 073 049 est relatif à un isolant pour des équipements électriques très résistants à l'humidité. La tenue à des températures élevées de cet isolant est très limitée. En effet, cet isolant est thermoplastique et à des températures supérieures à 250°C, il devient déformable de manière irréversible et ne peut plus remplir sa fonction.

Le brevet FR-1 280 436 décrit une isolation minérale pour des conducteurs métalliques électriques, réalisée à partir d'une composition comprenant des paillettes de mica et un organo polysiloxane. Cette composition est déposée par électrophorèse et n'est pas utilisée pour une imprégnation globale. De plus, cette isolation est destinée à des revêtements minces. La teneur en $SiO_2$ du revêtement minéral appliqué est inférieure à 30 % et cette isolation ne convient donc pas pour réaliser des produits massifs.

Le brevet DE-3 233 504 est relatif à un procédé de fabrication de couches isolantes pour câbles et conducteurs résistant à de hautes températures et imperméables à l'eau. Ce procédé consiste à réaliser une première couche à partir de mica et de verre qui forme un revêtement ignifuge mais perméable à l'eau puis une deuxième couche composée de mica et de caoutchouc silicone, imperméable à l'eau.

Ce procédé permet d'obtenir une protection de câbles, imperméable à l'eau mais il présente de nombreux inconvénients. Il est relativement complexe puisque deux opérations sont nécessaires. De plus, la deuxième couche ne résiste pas à des hautes températures. Enfin, la protection obtenue est conçue pour être efficace pendant une durée relativement courte (quelques heures), notamment en cas d'incendie et n'est pas utilisable comme produit isolant pour réaliser notamment des bobinages pour équipements électriques.

La demande de brevet GB-2 190 092 est relative à un procédé pour assurer l'étanchéité d'une discontinuité dans le manchon protecteur d'un câble. Il consiste à appliquer sur cette discontinuité un mélange de mica et de résine ayant une consistance de mastic et qui ne subit pas de traitement particulier. Quand il est soumis à des températures très élevées, notamment en cas d'incendie, le mélange devient solide et constitue toujours une protection efficace. On constate que ce mélange n'est pas fluide et ne peut donc pas être utilisé pour imprégner globalement des éléments comme des moteurs. De plus, il ne subit aucun traitement particulier, avant utilisation, lui conférant des caractéristiques déterminées, ce mélange ne jouant que le rôle d'une protection.

La demande de brevet FR-2 451 387 est relative à des compositions de siloxanes formant des matières céramiques à haute température et destinées à constituer des revêtements minces de conducteurs électriques, isolants du point de vue électrique. Ces matières céramiques ne conviendraient pas pour constituer des produits épais car leur teneur en $SiO_2$ est inférieure à 40 %. De plus, aucun traitement particulier n'est prévu pour éviter l'apparition de fissures dans le cas de formation d'épaisseurs relativement importantes.

Un but de l'invention est de proposer un procédé de préparation d'un produit électriquement isolant pouvant être utilisé pour imprégner globalement des éléments, pouvant également être utilisé avec des épaisseurs relativement importantes, dont les caractéristiques électriques, mécaniques et thermomécaniques sont optimales jusqu'à une température de fonctionnement de 1000°C et le restent pendant une durée relativement longue, compatible avec les éléments qui l'incorpore et dont la mise en oeuvre peut se faire de manière industrielle pour les applications d'isolation envisagées.

Ainsi, ce produit électriquement isolant est obtenu à partir d'un mélange de résine silicone réticulable et de poudre de mica dont la granulométrie est comprise entre 1 et 20 microns, le rapport en poids de mica sur résine silicone étant inférieur ou égal à 1, ce mélange étant soumis à un traitement particulier.

L'invention utilise préférentiellement un mica en poudre ne subissent aucun traitement mécanique, thermique ou chimique par rapport à l'état de livraison. Cette caractéristique facilite les conditions d'obtention du mélange isolant conforme à l'invention.

Selon une autre caractéristique préférentielle de l'invention, ladite résine est réticulable à chaud et la granulométrie de la poudre de mica utilisée est comprise entre 5 et 10 microns.

De manière optimale, le mélange qui permet d'obtenir un produit isolant présentant de très bonnes caractéristiques, présente un rapport en poids de mica sur résine silicone sensiblement égal à 0,4.

De manière optionnelle, en vue d'améliorer certaines caractéristiques physiques du produit final, il est possible d'ajouter au mélange de base constitué par la résine silicone et la poudre de mica, au moins une charge de matériau inorganique, le rapport en poids de charge sur mica étant dans ce cas, de préférence, inférieur à 10.

Il est par exemple possible d'ajouter au mélange de base, du nitrure d'aluminium AlN avec un rapport en poids préférentiel de nitrure d'aluminium sur mica sensiblement égal à 1, en vue d'améliorer la conductibilité thermique du produit isolant final. Il est aussi possible d'ajouter au mélange de base des fibres courtes monocristallines, appelées encore Wiskers, par exemple des fibres de verre ou de carbure de silicium SiC, avec un rapport en poids préférentiel de Wiskers sur mica sensiblement égal à 1, en vue d'améliorer les caractéristiques mécaniques du produit isolant final. Les caractéristiques mécaniques précitées sont en particulier la résistance à la flexion, la résistance à la compression et la dureté Shore du produit.

Le produit isolant électriquement de caractéristiques et de composition préférées présente une résistance à la flexion sensiblement égale à 3 MPa, une résistance à la compression sensiblement égale à 16 MPa et une dureté Shore sensiblement égale à 60, et pouvant atteindre 70.

Le produit isolant de caractéristiques optimales possède également une résistivité électrique sensiblement égale à $3 \times 10^7$ ohms x cm, est incombustible et sa température nominale de fonctionnement est comprise entre sensiblement - 200°C et 1000°C.

Dans cette gamme de températures, le produit conserve des caractéristiques stables, en particulier en ce qui concerne la résistance d'isolement et la résistance mécanique.

Le procédé d'obtention du produit électriquement isolant selon l'invention, se caractérise par les étapes suivantes :

- on effectue tout d'abord le mélange des éléments constitutifs de ce produit, c'est-à-dire essentiellement la poudre de mica dont la granulométrie est comprise entre 1 et 20 microns et la résine de silicone, le rapport en poids de mica sur résine silicone étant sensiblement inférieur à 1, ainsi qu'éventuellement les charges optionnelles, à une température procurant une viscosité dudit mélange permettant d'obtenir une bonne homogénéisation de celui-ci,
- on effectue un dégazage du mélange sous un vide sensiblement inférieur à 0,5 mm de mercure, pendant une durée au moins égale à 6 heures, et
- on procède à la polymérisation du mélange, conduisant à un durcissement de celui-ci, pendant sensiblement 12 heures à une température inférieure ou égale à 250°C ou optionnellement pendant sensiblement 24 heures à température ambiante et
- on fait subir au mélange polymérisé un traitement thermique comprenant une montée progressive en température dont la pente est comprise entre environ 20°C par heure et 200°C par heure, et un palier de température d'une durée de 8 à 24 heures, à une température comprise entre environ 250 et 1000°C.

L'étape de polymérisation permet d'obtenir le durcissement du mélange des éléments constitutifs du produit tandis que le traitement thermique conduit à une céramique.

Selon une variante de réalisation, il est possible d'accompagner l'opération de mélange d'une addition de produit diluant, tel qu'un solvant, en vue d'améliorer l'homogénéité du mélange.

A ce stade du procédé, le produit obtenu est solide et dense, et possède des caractéristiques mécaniques permettant son usinage en vue de réaliser des pièces de formes complexes, sans nécessiter, avantageusement, une mise en oeuvre complémentaire et coûteuse des techniques de moulage des céramiques.

De manière avantageuse, le dégazage est effectué lorsque l'on procède à la polymérisation du mélange.

Selon une caractéristique préférentielle de l'invention, le dégazage est également effectué lorsque l'on réalise le mélange des éléments constitutifs du produit.

Selon une autre caractéristique préférentielle de l'invention, le dégazage est également effectué pendant le traitement thermique, lors de la montée progressive en température.

Cette étape de dégazage améliore de façon notable les caractéristiques du produit isolant final.

En effet, l'élimination de la partie organique de la résine sous forme de gaz conduit inévitablement à l'apparition de macropores voire de fissures au sein du matériau céramique. La réalisation d'un dégazage du mélange pendant la polymérisation et éventuellement préalablement à celle-ci et/ou pendant le traitement thermique, sous un vide de l'ordre de $10^{-1}$ à $10^{-3}$ mm de mercure, conduit à un matériau nettement plus dense et extrêmement compact et résistant dès 500°C.

On a ainsi constaté que pour les mêmes éléments constitutifs, le produit isolant obtenu présentait une compacité de l'ordre de 50 %, lorsque le procédé était mis en oeuvre sans dégazage et une compacité d'environ 70 % lorsque le procédé comportait un dégazage.

On a aussi effectué des essais concernant la dureté du produit isolant. Les essais ont été réalisés sur deux

types d'échantillons dont les éléments constitutifs, identiques, sont le mica (30 %) et la résine (70%).

Les échantillons du type I ont été obtenus par le procédé décrit précédemment en supprimant l'étape de dégazage, tandis que les échantillons du type II ont été obtenus par le procédé selon l'invention, le dégazage étant obtenu pendant l'étape de polymérisation qui est réalisée sous vide (0,1 torr).

La mesure de la dureté a été effectuée au moyen d'un duromètre Shore. On a obtenu les résultats suivants :

- échantillons de type I : dureté Shore : 66,
- échantillons de type II : dureté Shore : 72.

Ces résultats montrent que le traitement de polymérisation sous vide et donc le dégazage ont augmenté la dureté du produit isolant final.

Il apparait aussi que l'étape de dégazage, en augmentant la compacité et la dureté du produit isolant final, permet de diminuer de façon notable les macropores et les fissures au sein du matériau céramique. En conséquence, elle permet notamment de réduire la reprise d'humidité du produit isolant et d'améliorer le caractère étanche de celui-ci.

On a pu remarquer que les conditions dans lesquelles était effectué le traitement thermique et, en particulier, la valeur de la pente de la montée en température, avaient une influence sur les caractéristiques du produit isolant final.

Les échantillons soumis aux essais ont été fabriqués dans les mêmes conditions sauf en ce qui concerne la phase de montée en température, lors du traitement de céramisation. Quatre phases de montée en température sont testées : 20°C/h, 75°C/h, 100°C/h et 200°C/h. Elles ont été suivies d'un palier de température à 500°C environ.

On caractérise la dureté de l'échantillon par la mesure de l'enfoncement d'une bille sous une force de 200 N.

Les résultats sont donnés dans le tableau suivant :

| Montée en Temp. °C/h | 20 | 75 | 100 | 200 |
|---|---|---|---|---|
| Enfoncement en µm | 4 | 4 | 3,2 | 2,9 |

Ces résultats montrent une augmentation de la dureté (ou une diminution de l'enfoncement), lorsque la valeur de la pente de la montée en température augmente.

D'un point de vue industriel, il est cependant plus simple de réaliser une montée en température de pente de 100°C/h que de 200°C/h.

C'est pourquoi, selon une caractéristique préférentielle de l'invention, ledit traitement thermique comprend une montée progressive en température, de pente sensiblement égale à 100°C par heure, et consécutivement, un palier de température sensiblement égale à 500°C pendant une durée sensiblement égale à 12 heures, dans le cas d'une utilisation du produit isolant à une température de fonctionnement environ égale à 450°C.

La résine utilisée pour réaliser le produit isolant final est choisie de préférence de façon à ce que la teneur en $SiO_2$ du produit soit relativement importante. En effet, les caractéristiques mécaniques sont d'autant meilleures que la proportion d'éléments minéraux dans le produit est plus importante.

On peut notamment citer les résines polysiloxanes comportant essentiellement les groupements suivants : méthyle, vinyle, phényle et hydro et qui peuvent être schématisées de la manière suivante :

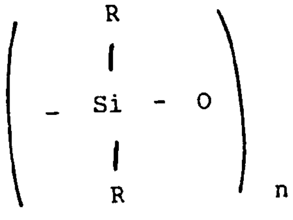

R pouvant être :

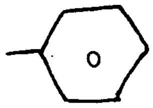

ou - $CH_3$ ou - H ou - CH = $CH_2$, étant entendu que les substituants - H ou - CH = $CH_2$ se situent sur deux chaînes différentes.

Cette résine fait partie de la classe des résines réticulables et plus précisément des résines thermodurcissables, c'est-à-dire qu'elle durcit irréversiblement lorsque la température augmente (cette transformation est obtenue dans le cas de la résine utilisée par un chauffage à 190°C pendant 12 heures).

Les rapports molaires des différentes fonctions sont d'environ : méthyle/phényle = 2,5 ; vinyle/phényle = 0,2 ; hydro/phényle = 0,3 ; le système comportant de plus un catalyseur à base de platine.

Cette composition a l'avantage de conduire lors du procédé d'obtention du produit final à un dégagement moins important de composés organiques issus de la décomposition chimique de la résine et de ce fait, à un produit plus dense. En effet, lors de la polymérisation du mélange, la composition pondérale des différents éléments (C,H,Si) reste constante, par contre le traitement thermique qui conduit à une céramique, s'accompagne de l'élimination des groupements carbonés.

Ceci est montré par les résultats d'analyse suivants, obtenus pour un mélange comprenant initialement 30 % de mica.

| % | C | H | Si |
|---|---|---|---|
| Polymérisation | 30 | 4,3 | 24 |
| Traitement | 0,1 | 0,8 | 32,2 |

De même, le taux de silice ($SiO_2$), obtenu par la dégradation thermique de la résine utilisée ici, est de l'ordre de 60 % alors qu'il est de l'ordre de 40 % pour les résines utilisées classiquement.

La résine qui vient d'être décrite est réticulable à chaud mais on pourrait aussi utiliser une résine réticulable à froid.

L'invention propose donc un produit électriquement isolant pouvant être utilisé, notamment en atmosphère oxydante, jusqu'à des températures élevées pouvant atteindre 1000°C. En outre, ce produit isolant peut être aisément mis en oeuvre de manière industrielle pour réaliser des bobinages de tous types pour machine électrique tournante, bobinages statiques pour transformateur, inducteur, et self-inductance et la réalisation de pièces isolantes de formes complexes, tels que isolateur, cale, bouclier thermique, etc ... En particulier, la présente invention ouvre la voie à une nouvelle génération de moteurs utilisables dans des applications variées :

- militaire : moteurs ou alternateurs susceptibles de fonctionner occasionnellement à des températures très élevées,
- sidérurgie : procédé d'élaboration et de transformation de métaux en fusion (laminage de tôles sur train à bandes),
- production d'énergie électrique : moteurs de sécurité pour pompes et vannes fonctionnant en cas d'incendie,
- métallurgie et électrométallurgie : brassage d'air dans les fours, chargement/déchargement des fours,
- chimie et pétrochimie : brassage d'air dans les étuves et autoclaves, extraction de fumées et de particules, pompes de sécurité,
- production de céramiques, chaux et ciments :brassage et injection d'air, extraction de fumées.

Dans la plupart des domaines précités, des solutions mécaniques souvent coûteuses avaient été retenues jusqu'à maintenant pour pallier les limites actuelles de fonctionnement en température des machines utilisées.

Des résultats d'essais réalisés par la demanderesse, ont permis de valider les choix effectués en ce qui concerne le mélange résine-mica et le cycle de mise en oeuvre du matériau isolant. De plus, l'étude du processus de formation du matériau a mis en évidence la rôle de la résine silicone qui, en se décomposant par voie thermique, forme "le ciment" à base de silice qui maintient les particules de mica assemblées les unes avec les autres. Cette caractéristique est favorable à l'obtention d'un bon frittage.

**Revendications**

1. Procédé d'obtention d'un produit électriquement isolant, caractérisé par les étapes suivantes :
   - on effectue le mélange des éléments constitutifs de ce produit, résine silicone réticulable et poudre de mica dont la granulométrie est comprise entre 1 et 20 microns, le rapport en poids de mica sur résine silicone étant inférieur ou égal à 1, à une température procurant une viscosité du mélange permettant d'obtenir une homogénéisation de celui-ci,
   - on effectue un dégazage de mélange sous un vide inférieur à 0,5 mm de mercure, pendant une durée au moins égale à 6 heures,
   - on procède à la polymérisation du mélange pendant 12 heures à une température inférieure ou égale à 250°C ou pendant 24 heures à température ambiante et
   - on fait subir au mélange polymérisé un traitement thermique comprenant une montée progressive en température dont la pente est comprise entre 20° C/H et 200°C/h, jusqu'à une température comprise entre 250 et 1 000°C, suivie d'un palier à cette température d'une durée comprise entre 8 et 24 heures.

2. Procédé selon la revendication 1, caractérisé en ce qu'on accompagne l'opération de mélange d'une addition de produit diluant.

3. Procédé selon l'une des revendications 1 ou 2, caractérisé en ce que l'on effectue le dégazage pendant la polymérisation du mélange.

4. Procédé selon l'une des revendications 1 à 3, caractérisé en ce que l'on effectue de plus un dégazage pendant la réalisation du mélange des éléments constitutifs du produit.

5. Procédé selon l'une des revendications 1 à 4, caractérisé en ce que l'on effectue de plus un dégazage pendant ledit traitement thermique durant la montée progressive en température.

6. Procédé selon l'une des revendications 1 à 5, caractérisé en ce que ledit traitement thermique comprend une montée progressive en température, de pente égale à 100°C/h, et un palier de température égale à 500°C pendant une durée égale à 12 heures.

7. Procédé selon l'une des revendications 1 à 6, caractérisé en ce que la résine silicone est une résine réticulable à chaud et en ce que la granulométrie de la poudre de mica est comprise entre 5 et 10 microns.

8. Procédé selon l'une des revendications 1 à 7 , caractérisé en ce que le rapport en poids de mica sur résine silicone est égal à 0,4.

9. Procédé selon l'une des revendications 1 à 8, caractérisé en ce qu'il comprend au moins un élément constitutif additionnel, constitué par une charge de matériau inorganique, le rapport en poids de charge sur mica étant inférieur à 10.

10. Procédé selon la revendication 9, caractérisé en ce qu'un élément additionnel est du nitrure d'aluminium (AlN), le rapport en poids de nitrure d'aluminium sur mica étant égal à 1.

11. Procédé selon l'une des revendications 9 ou 10 , caractérisé en ce qu'un élément additionnel est constitué par des fibres courtes monocristallines ou Wiskers, le rapport en poids de Wiskers sur mica étant égal à 1.

**Patentansprüche**

1. Verfahren zur Herstellung eines elektrisch isolierenden Produkts, gekennzeichnet durch die folgenden

Schritte:

- Mischen der Bestandteile des Produkts, vernetzbares Silikonharz und Glimmerpulver mit Korngrößen zwischen 1 und 20 µm, wobei das Gewichtsverhältnis von Glimmer zu Silikonharz kleiner oder gleich 1 ist, bei einer Temperatur, die eine Viskosität des Gemischs ergibt, die dessen Homogenisierung erlaubt;
- Entgasen des Gemischs in einem Vakuum von unter 0,5 mm Hg während wenigstens 6 Stunden;
- Polymerisation des Gemischs während 12 Stunden bei einer Temperatur kleiner oder gleich 250°C oder während 24 Stunden bei Raumtemperatur; sowie
- thermische Behandlung des polymerisierten Gemischs, die einen allmählichen Temperaturanstieg umfaßt, dessen Steigung zwischen 20°C/h und 200°C/h liegt, bis zu einer Temperatur zwischen 250 und 1000°C, anschließendes Konstanthalten dieser Temperatur zwischen 8 und 24 Stunden.

**2.** Verfahren gemäß Anspruch 1, dadurch gekennzeichnet, daß man beim Mischen ein Verdünnungsmittel dazugibt.

**3.** Verfahren gemäß einem der Ansprüche 1 oder 2, dadurch gekennzeichnet, daß man das Entgasen während der Polymerisation des Gemischs durchführt.

**4.** Verfahren gemäß einem der Ansprüche 1 bis 3, dadurch gekennzeichnet, daß man außerdem ein Entgasen während des Mischens der Bestandteile des Produkts durchführt.

**5.** Verfahren gemäß einem der Ansprüche 1 bis 4, dadurch gekennzeichnet, daß man außerdem ein Entgasen bei der thermischen Behandlung während des immer stärkeren Temperaturanstiegs durchführt.

**6.** Verfahren gemäß einem der Ansprüche 1 bis 5, dadurch gekennzeichnet, daß die thermische Behandlung einen allmählichen Temperaturanstieg mit einer Steigung von 100°C/h und ein Konstanthalten bei einer Temperatur von 500°C während 12 Stunden umfaßt.

**7.** Verfahren gemäß einem der Ansprüche 1 bis 6, dadurch gekennzeichnet, daß das Silikonharz ein in der Wärme vernetzbares Harz ist und daß die Korngröße des Glimmerpulvers zwischen 5 und 10 µm liegt.

**8.** Verfahren gemäß einem der Ansprüche 1 bis 7, dadurch gekennzeichnet, daß das Gewichtsverhältnis von Glimmer zu Silikonharz gleich 0,4 ist.

**9.** Verfahren gemäß einem der Ansprüche 1 bis 8, dadurch gekennzeichnet, daß es wenigtens einen weiteren Bestandteil umfaßt, der aus einer Charge eines anorganischen Stoffes besteht, wobei das Gewichtsverhältnis der Charge zum Glimmer kleiner als 10 ist.

**10.** Verfahren gemäß Anspruch 9, dadurch gekennzeichnet, daß ein weiterer Bestandteil Aluminiumnitrid (AlN) ist, wobei das Gewichtsverhältnis von Aluminiumnitrid zu Glimmer gleich 1 ist.

**11.** Verfahren gemäß einem der Ansprüche 9 oder 10, dadurch gekennzeichnet, daß ein weiterer Bestandteil aus monokristallinen kurzen Fasern oder Whiskers besteht, wobei das Gewichtsverhältnis von Whiskers zu Glimmer gleich 1 ist.

## Claims

**1.** Process for obtaining an electrically insulating product characterized by the following steps:

- mixing the constitutive components of said product comprising a curable silicone resin and a mica powder having a size between 1 and 20 micrometers, the weight ratio mica: silicone resin being less or equal to 1, at a temperature giving a viscosity of the mixture allowing to obtain homogeneisation thereof,
- degazing the mixture under a vacuum less than 0.5 mm Hg during at least 6 hours,
- polymerizing the mixture during 12 hours at a temperature less or equal to 250°C or during 24 hours at the ambient temperature and
- heat treating the polymerized mixture with a progressive increase of the temperature the level of which is between 20°C/h and 200°C/h until a temperature between 250 and 1000°C, followed by a

stage at said temperature according to a time between 8 and 24 hours.

2. Process according to claim 1, characterized in that a diluent addition is provided during the mixing.

3. Process according to one of claims 1 or 2, characterized in that the degazing step is made during the polymerisation of the mixture.

4. Process according to one of claims 1 to 3, characterized in that, moreover, a degazing step is made during the mixing of the constitutive components of the product.

5. Process according to one of claims 1 to 4, characterized in that, moreover, a degazing step is made during said heat treating when the temperature increases progressively.

6. Process according to one of claims 1 to 5, characterized in that said heat treating comprises a progressive increase of the temperature with a level of 100°C/h and a temperature stage of 500°C during 12 hours.

7. Process according to one of claims 1 to 6, characterized in that the silicone resin is a hot curable resin and in that the size of the mica powder is between 5 and 10 micrometers.

8. Process according to one of claims 1 to 7, characterized in that the weight ratio mica:silicone resin is equal to 0.4.

9. Process according to one of claims 1 to 8, characterized in that it is provided at least an additional constitutive component comprising an inorganic filler, the weight ratio filler:mica being less than 10.

10. Process according to claim 9, characterized in that an additional component is aluminium nitride (AlN), the weight ratio aluminium nitride:mica being 1.

11. Process according to one of claims 9 or 10, characterized in that an additional component comprises monocrystalline short fibers or wiskers, the weight ratio wiskers:mica being 1.